# EUROPÄISCHE PATENTANMELDUNG

(11) **EP 2 184 809 A1**
(43) Veröffentlichungstag der Anmeldung: **12.05.2010**
(21) Anmeldenummer: 08450176.6
(22) Anmeldetag: 10.11.2008
(51) Int. Cl.: H01R 11/01, H01R 13/04

(54) **Einrichtung zum Kontaktieren von elektrischen Heizelementen**

(71) Anmelder: Payer International Technologies GmbH & Co. KG, 8151 St. Bartholomä (AT)
(72) Erfinder: Hendler, René, 8020 Graz (AT)
(74) Vertreter: Haffner und Keschmann Patentanwälte OG

(57) **Zusammenfassung**

Bei einer Einrichtung zum Kontaktieren von elektrischen Heizelementen eines Paneelbodens mit verrastbaren Profilteilen, insbesondere Nut und Federprofilteilen (7, 9) bei welchen verrastbaren Profilteilen sich über die Länge derselben erstreckende Kontaktflächen angeordnet sind, ist wenigstens ein Kontaktelement (1) mit einer klauenförmigen Öffnung vorgesehen, dessen Klauenform und Klauenweite im Wesentlichen der Ausbildung der Profilteile entspricht, wobei die Klauen (2, 3) die Profilteile umgreifen und mit wenigstens einem elektrisch leitenden Klauenarm federnd an die Kontaktfläche anpressbar sind.

## Beschreibung

Die Erfindung bezieht sich auf eine Einrichtung zum Kontaktieren von elektrischen Heizelementen eines Paneelbodens mit verrastbaren Profilteilen, insbesondere Nut und Federprofilteilen, bei welchen verrastbaren Profilteilen sich über die Länge derselben erstreckende Kontaktflächen angeordnet sind.

Paneelböden können mit einem entsprechenden verrastbaren Nut- und Federsystem ausgebildet sein und auf diese Weise relativ leicht verlegt werden. Bei entsprechender Ausbildung der Nut bzw. der Feder benachbarter Paneele kann durch Verschwenken in die Bodenebene nach einem entsprechenden Anlegen die benachbarte Nut bzw. Feder ein Klicken oder Rasten bewirkt werden, welche die einzelnen Paneele relativ zueinander gegenseitig verriegelt. Im Zusammenhang mit derartigen Paneelböden sind auch Ausbildungen bekannt, bei welchen an der Unterseite der Paneele elektrische Widerstandselemente und beispielsweise ein Widerstandslack angebracht wird, wobei im Anschluss an das Aufbringen der Widerstandselemente oder eines Widerstandslacks auch eine Trittschalldämmung auf der Paneelunterseite aufgeklebt werden kann. Um derartige Widerstandselemente elektrisch zu kontaktieren, sind Ausbildungen von Paneelen bekannt, bei welchen die Nut oder die Feder über ihre gesamte Länge mit einer elektrischen Folie belegt sind, welche selbst mit den Widerstandselementen bzw. dem Widerstandslack leitend verbunden sind. Um derartige Widerstandselemente bzw. Widerstandslacke mit Strom zu versorgen, muss somit ein entsprechendes Anschlusselement oder Kontaktelement geschaffen werden, welche mit den in die Nut bzw. in die Feder eingelegten Anschlussfolien leitend verbunden werden kann. Zu diesem Zweck wurde bereits vorgeschlagen, im Bereich der Sockelleiste derartiger Böden einzelne Paneele verkürzt auszubilden, um auf diese Weise unter der Sockelleiste einen entsprechenden Freiraum zu schaffen, an welchem die elektrischen Anschlüsse zu den leitenden Folien der Nut oder der Feder geführt werden können. Bekannte Elemente haben hier benachbarte Paneele federnd übergriffen, wobei die Kontaktierung allerdings auf Grund von möglichen thermischen Ausdehnungen häufig problematisch waren. Die Federwirkung war hierbei lediglich durch das Anpressen des Kontaktelements mittels der Sockelleiste gewährleistet, was bei nicht völlig ebenen Böden und bei unterschiedlichen Verwerfungen und Verwindungen zu Kontaktfehlern und damit zu Funktionsstörungen Anlass geben kann. Mit Rücksicht auf die relativ hohe Heizleistung und bei gegenüber Netzspannung verringerter Spannung relativ hoher Stromstärke führen Kontaktfehler zu einer unzulässigen lokalen Erhitzung und gegebenenfalls auch zu Funkenbildung, so dass an die Qualität der Kontaktierung besonders hohe Ansprüche gestellt werden. Insbesondere muss das Anschlusssystem sicherstellen, dass eine Lockerung auch über einen langen Zeitraum nicht erfolgen kann, um Funkenbildung und damit Brandgefahr hintan zu halten.

Die Erfindung zielt nun darauf ab, eine Einrichtung der eingangs genannten Art zu schaffen, mit welcher eine zuverlässige Kontaktierung über einen langen Zeitraum gelingt und relativ einfache Bauteile realisiert werden. Zur Lösung dieser Aufgabe besteht die erfindungsgemäße Einrichtung der eingangs genannten Art im Wesentlichen darin, dass wenigstens ein Kontaktelement mit einer klauenförmigen Öffnung vorgesehen ist, dessen Klauenform und Klauenweite im Wesentlichen der Ausbildung der Profilteile entspricht, wobei die Klauen die Profilteile umgreifen und mit wenigstens einem elektrisch leitenden Klauenarm federnd an die Kontaktfläche anpressbar sind und wobei weiters der elektrisch leitende Klauenarm mit einem Anschluss einer Stromquelle verbindbar ist. Dadurch, dass das Kontaktelement klauenförmig ausgebildet ist, wird die Möglichkeit geschaffen, die zu kontaktierende elektrisch leitende Folie zu umgreifen und bei entsprechender Dimensionierung der Klauenweite und Klauenform unmittelbar mit dem Kontaktelement den erforderlichen Anpressdruck für eine sichere Kontaktierung zu gewährleisten. Eine derartige Ausbildung ist somit unabhängig von möglichen Verschiebungen weiterer Bauteile, wie beispielsweise einer Sockelleiste und Bewegung des Paneels, da die erforderliche Kontaktkraft unmittelbar durch das Kontaktelement selbst aufgebracht und damit eine sichere Kontaktierung gewährleistet ist. Die klauenförmige Gestalt erlaubt es, die Klaue selbst als Federelement auszubilden, wobei die Federkraft der Aufweitung der Klauen des Kontaktelementes entgegenwirkt. Bei entsprechender Ausgestaltung des Federkontaktelements kann der elektrische Anschluss mit konventionellen marktüblichen Anschlussgliedern erfolgen, welche beispielsweise über einen Flachstecker eines derartigen klauenförmigen Kontaktelementes aufgeschoben werden können. Die Isolierung kann hierbei in einfacher Weise so gewählt werden, dass keiner der Bauteile über die Oberfläche des Paneels vorragt, so dass eine mechanische Beanspruchung der Kontaktelemente im Betrieb vermieden wird.

In besonders vorteilhafter Weise ist die Ausbildung erfindungsgemäß so getroffen, dass das Kontaktelement wenigstens drei zueinander parallele Zungen aufweist, von welchen wenigstens eine gekröpft ausgebildet und unter Umgreifen eines Profilteiles mit diesem elastisch verrastbar ist, wobei mit Vorteil das Kontaktelement eine isolierende Abdeckung trägt. Derartige Kontaktelemente mit federnden Klauen, die über entsprechende Anschlussstücke aufgeschoben werden können, können mit konventionellen Bauteilen, wie sie beispielsweise für die Verdrahtung von Autoelektrik und Autoelektronik üblich sind, eingesetzt werden und sind in wirtschaftlicher und konstruktiv einfacher Weise herzustellen. Die isolierende Abdeckung dient hierbei einem weiteren Schutz, wobei prinzipiell davon ausgegangen werden darf, dass an derartige heizbare Paneele nur Niederspannung angelegt wird, wodurch naturgemäß auch entsprechend höhere Ansprüche an die Sicherheit der Kontaktierung gestellt werden, da bei gleich bleibender Leistung und geringerer Spannung entsprechend höhere Stromstärke aufgewandt werden muss.

In besonders einfacher Weise ist die Ausbildung so getroffen, dass das Kontaktelement aus einem federndem Leiter, insbesondere Metall, besteht, wobei vorzugsweise die zueinander parallelen Zungen die Kontaktflächen an in Höhenrichtung gesehen übereinander liegenden Seiten der Profilteile federnd angreifen. Insgesamt wird auf diese Weise bei kompakten Abmessungen eine hohe Federkraft erzielt und eine besonders sichere Kontaktierung erreicht.

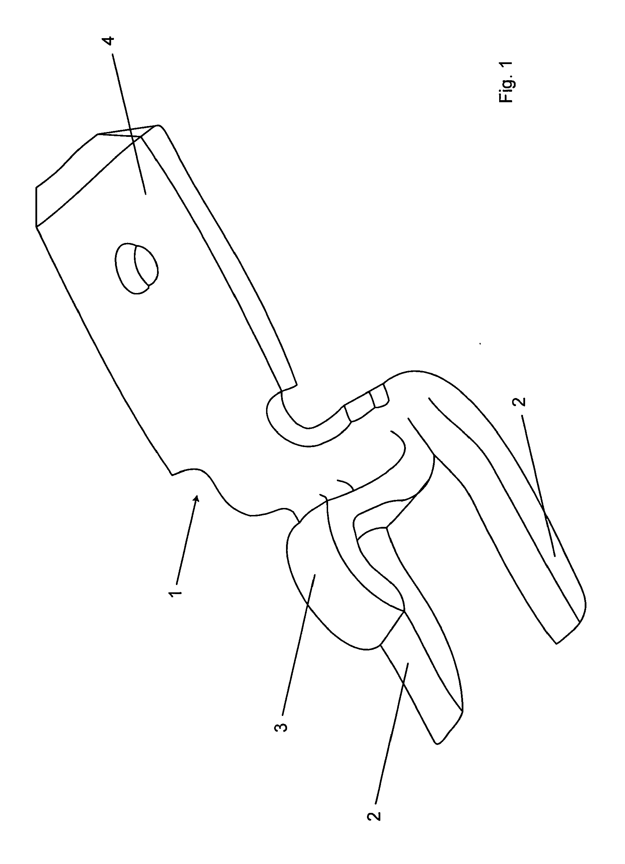

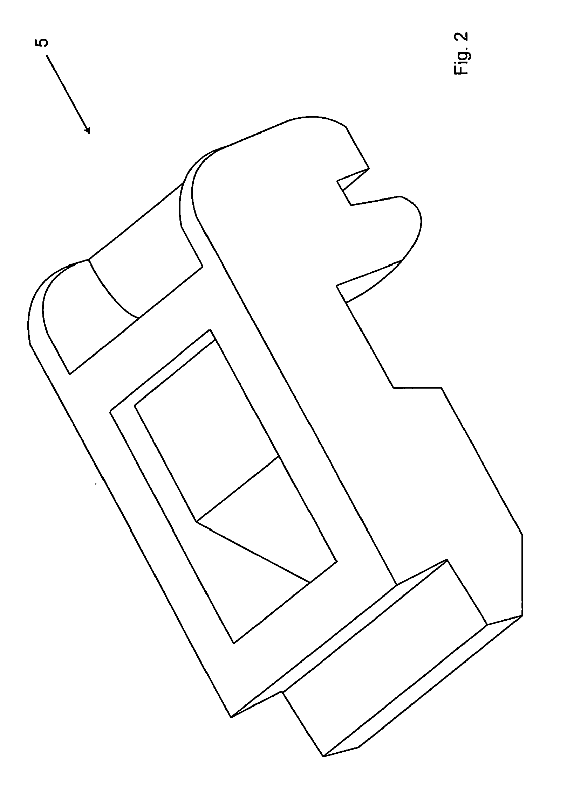

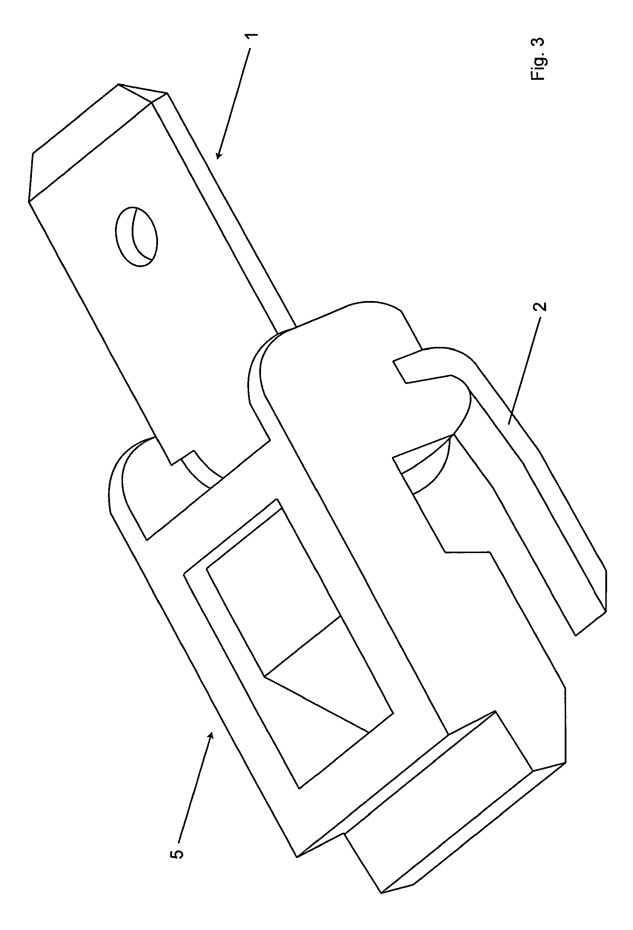

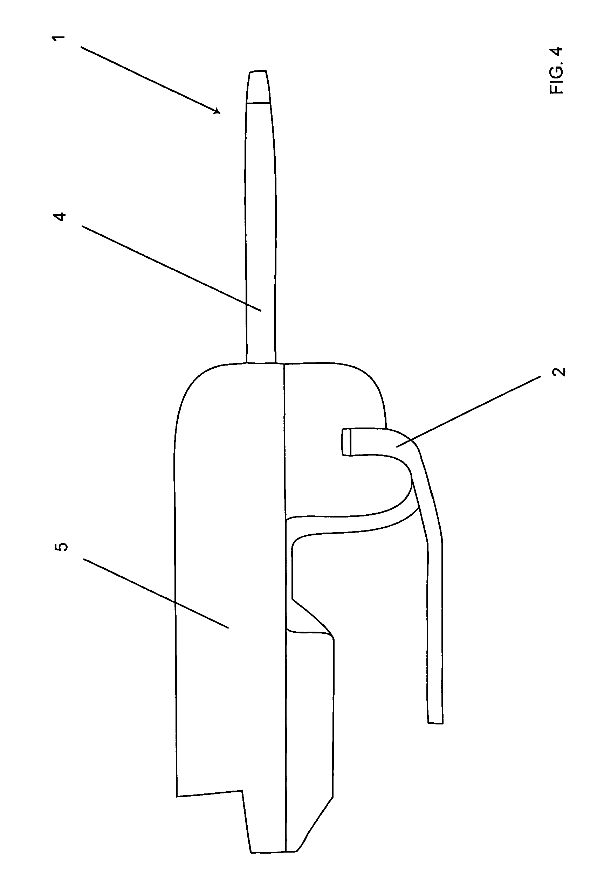

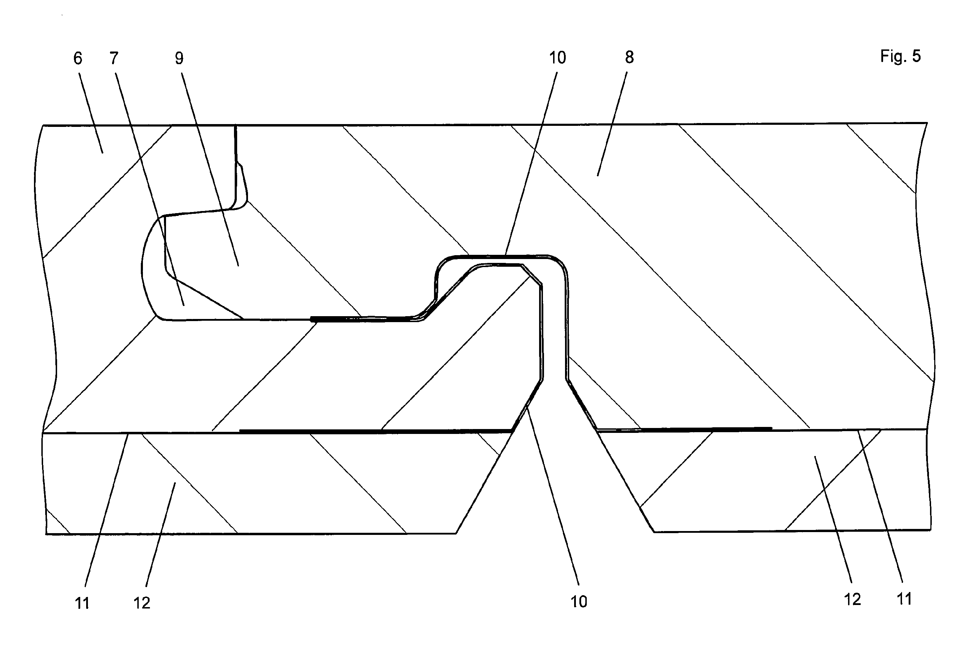

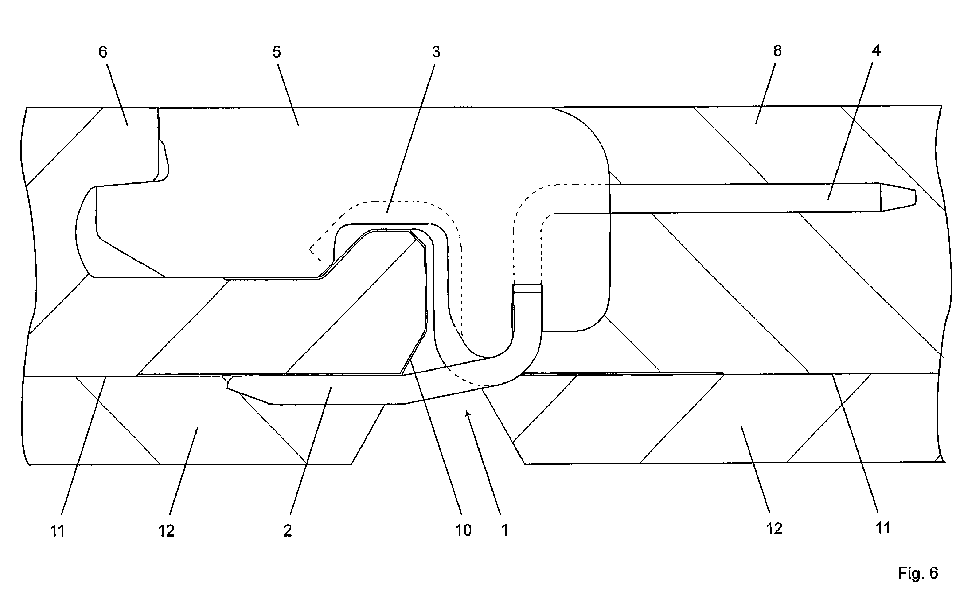

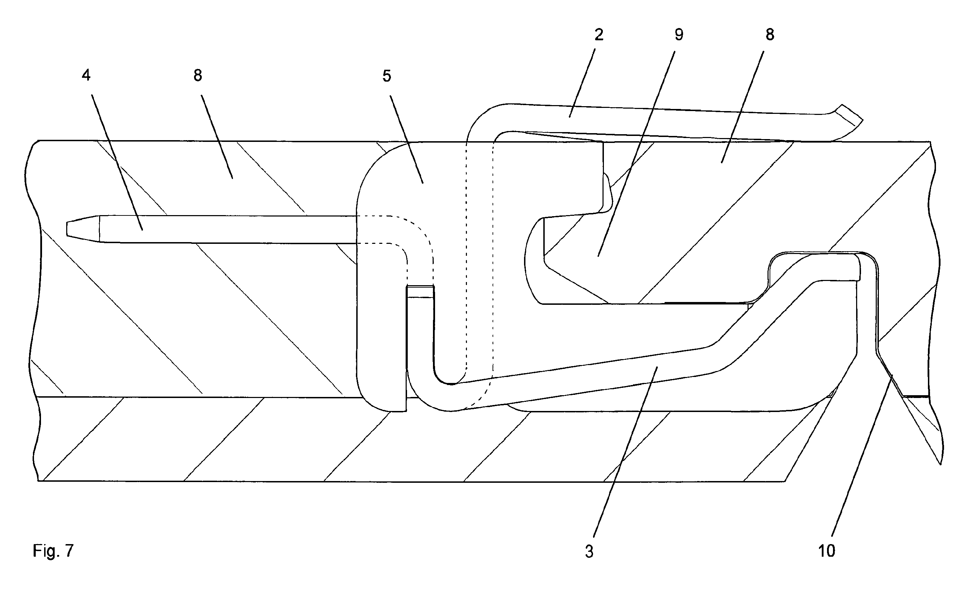

Die Erfindung wird nachfolgend anhand eines in der Zeichnung schematisch dargestellten Ausführungsbeispieles näher erläutert. In dieser zeigt Figur 1 eine perspektivische Ansicht eines Kontaktelementes gemäß der vorliegenden Erfindung, Figur 2 ein auf das Kontaktelement nach Figur 1 aufsteckbare Form eines Gehäuses bzw. einer isolierenden Abdeckung, Figur 3 das in das Gehäuse gemäß Figur 2 eingesteckte Kontaktelement nach Figur 1, Figur 4 eine schematische Seitenansicht der Darstellung nach Figur 3, Figur 5 eine Detailansicht des Nut- und Federprofils benachbarter Paneele, Figur 6 eine entsprechende Ansicht der eingebrachten und angesteckten Kontaktelemente und Figur 7 ein alternatives Kontaktelement, welches die Feder kontaktiert.

In Figur 1 ist ein Kontaktelement 1 ersichtlich. Das Kontaktelement ist klauenförmig ausgebildet und weist Federklauen 2 und eine gekröpfte Klaue 3 auf, wobei auf dem flachen Abschnitt 4 des Kontaktelementes ein nicht dargestelltes Kabel aufgesteckt werden kann, um die elektrische Verbindung mit dem Kontaktelement 1 zu gewährleisten. In Figur 2 ist ein Gehäuse 5 für das Kontaktelement 1 nach Figur 1 ersichtlich, wobei Figur 3 das Kontaktelement um das Gehäuse 5 in zusammengebautem Zustand in perspektivischer Darstellung erkennen lässt.

Figur 4 zeigt das in Figur 3 perspektivisch dargestellte Kontaktelement in der Seitenansicht.

In Figur 5 ist mit 6 ein erstes Paneel mit einer Nut 7 ersichtlich, in welcher ein zweites Paneel 8 mit ihrer Feder 9 verrastbar ist. Die Feder 9 trägt eine leitende Folie 10, welche mit einem an der Unterseite des Paneels 8 angeordneten leitfähigen Lack 11 leitend verbunden ist, mit 12 ist eine Trittschalldämmung bezeichnet. In analoger Weise weist die Nut 7 des Paneels 6 eine leitfähige Folie 10 auf, welche wiederum mit dem leitfähigen Lack 11 verbunden ist und auf diese Weise die Beheizung des Paneels 6 bzw. 8 gewährleistet.

Bei der Darstellung der Figur 6 ist nun wiederum die Verbindung entsprechend der Figur 5 zwischen benachbarten Paneelen 6 und 8 ersichtlich, wobei hier das Paneel 8 naturgemäß an der Stelle, an welcher das Kontaktelement 1 eingesetzt ist, ausgenommen ist, wobei es sich hier um eine Stirnseite des Paneels 8 handelt, welche einer wandseitig angeordneten Fußbodenleiste benachbart ist. Bei der Darstellung der Figur 6 ist ersichtlich, dass die federnden Arme 2 des Kontaktelementes 1 das Paneel 6 untergreifen und in die Trittschalldämmung 12 in einer Weise eintauchen, dass die selbst wiederum in leitendem Kontakt mit der Folie 10 bzw. dem leitfähigen Lack 11 gelangen. Eine sichere Kontaktierung wird aber durch den gekröpften Arm 3 des Kontaktelementes 1 gewährleistet, der federnd mit der leitfähigen Folie 10 zusammenwirkt. Der elektrische Anschluss erfolgt wiederum über die Anschlusszunge 4. Eine entsprechend abgewandelte Ausbildung kann die Kontaktierung der Folie 10 der benachbarten Feder des Paneels 8 sein. Ebenso gut kann aber auch ein identisches Kontaktelement 1 an jedem zweiten Paneel angreifen, so dass der elektrische Strom in der Folge über jeweils zwei benachbarte Paneele um den jeweiligen leitfähigen Lack 1 geleitet wird, da ja die benachbarten Paneele 6 und 8, wie in Figur 5 ersichtlich, mit ihren elektrisch leitfähigen Folien 10 über die gesamte Länge der Feder bzw. Nut im elektrisch leitenden Kontakt stehen und auf diese Weise die Kontaktierung gewährleisten.

In Figur 7 ist eine alternative Ausbildungsform des erfindungsgemäßen Kontaktelementes 1 abgebildet, wobei der gekröpfte Arm 3 die Folie 10 an der Unterseite der Feder 9 des Paneels 8 angreift. Die federnden Arme 2 ragen hierbei über die Oberfläche des Fußbodens und werden daher isoliert oder aus einem nicht leitenden Material hergestellt. Eine nicht dargestellte Fuß- bzw. Abschlussleiste deckt diese in Folge ab.

Prinzipiell können die Kontaktelemente nach dem Ansetzen in die Bodenebene verschwenkt werden, so dass keine Teile über den Belag vorragen. Bei ausreichendem seitlichem Platz können die Kontaktelemente naturgemäß auch seitlich aufgeschoben werden, worauf das Paneel gegebenenfalls in die Bodenebene abgesenkt wird.

## Patentansprüche

1. Einrichtung zum Kontaktieren von elektrischen Heizelementen eines Paneelbodens mit verrastbaren Profilteilen, insbesondere Nut und Federprofilteilen bei welchen verrastbaren Profilteilen sich über die Länge derselben erstreckende Kontaktflächen angeordnet sind, **dadurch gekennzeichnet, dass** wenigstens ein Kontaktelement (1) mit einer klauenförmigen Öffnung vorgesehen ist, dessen Klauenform und Klauenweite im Wesentlichen der Ausbildung der Profilteile entspricht, wobei die Klauen (2, 3) die Profilteile umgreifen und mit wenigstens einem elektrisch leitenden Klauenarm federnd an die Kontaktfläche anpressbar sind und wobei weiters der elektrisch leitende Klauenarm mit einem Anschluss einer Stromquelle verbindbar ist.

2. Einrichtung nach Anspruch 1, **dadurch gekennzeichnet, dass** das Kontaktelement (1) wenigstens drei zueinander parallele Zungen aufweist, von welchen wenigstens eine gekröpft ausgebildet und unter Umgreifen eines Profilteiles mit diesem elastisch verrastbar ist.

3. Einrichtung nach Anspruch 1 oder 2, **dadurch gekennzeichnet, dass** das Kontaktelement (1) eine isolierende Abdeckung (5) trägt.

4. Einrichtung nach einem der Ansprüche 1 bis 3, **dadurch gekennzeichnet, dass** das Kontaktelement (1) aus einem federndem Leiter, insbesondere Metall, besteht.

5. Einrichtung nach einem der Ansprüche 1 bis 4, **dadurch gekennzeichnet, dass** die zueinander parallelen Zungen die Kontaktflächen an in Höhenrichtung gesehen übereinander liegenden Seiten der Profilteile federnd angreifen.
